# EUROPEAN PATENT APPLICATION

(11) **EP 1 418 159 A2**
(43) Date of publication of application: **12.05.2004**
(21) Application number: 03025463.5
(22) Date of filing: 06.11.2003
(51) Int. Cl.: C03B 19/12

(54) **Method and apparatus for sintering a gel tube**

(30) Priority: 08.11.2002 KR 2002069172
(71) Applicant: SAMSUNG ELECTRONICS CO. LTD., Suwon-city, Kyounggi-do 441-742 (KR)
(72) Inventor: Son, Weon-Jung, Samsung Electronics Co., Ltd., Suwon-city Kyugki-do (KR); Park, Yon-Yong, Samsung Electronics Co., Ltd., Suwon-city Kyugki-do (KR); Baik, Young-Min, Samsung Electronics Co., Ltd., Suwon-city Kyugki-do (KR); Oh, Jeong-Hyun, Samsung Electronics Co., Ltd., Suwon-city Kyugki-do (KR)
(74) Representative: Lang, Johannes, Dipl.-Ing.

(57) **Abstract**

Disclosed are a method and an apparatus for sintering a gel tube (310) formed by a sol-gel change. The sintering apparatus comprises a reaction chamber (300) for accommodating the gel tube, sealed under a vacuum condition; a vacuum pump (330) for adjusting a degree of vacuum inside the reaction chamber according to a control signal; a vacuum gauge (302) for measuring the degree of vacuum inside the reaction chamber; a movable part (320) for supporting the gel tube and for rotating and vertically moving the gel tube according to the control signal; a temperature sensor (303) for measuring a temperature inside the reaction chamber; a heater (301) for adjusting the temperature inside of the reaction chamber according to the control signal so as to sinter the gel tube; and, a controller (340) for controlling the vacuum pump, the heater, and the movable part so as to sinter the gel tube under the vacuum condition. The method comprises the steps of sintering the gel tube under a vacuum condition while being rotated and moved vertically to increase diffusion rate of gas remaining in the tube.

## Description

### BACKGROUND OF THE INVENTION

### 1. Field of the Invention

The present invention relates to an optical fiber preform, and more particularly to a method and an apparatus for manufacturing a gel tube using a sol-gel process.

### 2. Description of the Related Art

An optical fiber comprises a core serving as a medium for transmitting an optical signal and a clad surrounding an outer circumference of the core for reflecting optical signal incident onto the core internally, so that the optical signal travels within the optical fiber.

The optical fiber is manufactured by drawing an optical preform, which is comprised of a first preform manufactured by a chemical vapor deposition and a VAD (Vapor phase Axial Deposition) techniques and a second preform manufactured by cladding the first preform with a glass tube. The clad tube of the preform can be manufactured by a chemical vapor deposition in which a solid silica glass is formed through a vapor reaction and a sol-gel process using a liquid material of a high degree of purity. Since the solid silica glass is manufactured through a vapor reaction, the chemical vapor deposition is performed at a high temperature and an apparatus used in this process is expensive, thus increasing a manufacturing cost of the glass tube. Meanwhile, the sol-gel process requires a liquid reaction, thus allowing a high productivity but needs to adjust the composition of the manufactured glass tube frequently.

Briefly, a conventional process for manufacturing a glass tube using the sol-gel process includes, in sequence, a dispersing and mixing step, a molding step, a de-molding step, a dehydrating step, an organic substance treating step, and a sintering step.

In the dispersing and mixing step, a starting material such as silicon alkoxide is mixed with deionized water, then added with additives such as a dispersing agent to form a uniform sol.

In the molding step, the sol formed by the above dispersing and mixing step is introduced into a mold with a designated shape, then gelled to be changed into a gel.

In the de-molding step, a gel tube with a cylindrical shape formed within the mold in the above molding step is removed from the mold to be maturated.

In the dehydrating step, the gel tube removed from the mold is dehydrated under a drying condition where a constant temperature is maintained inside of a humidity chamber. As a result, water contained in the gel tube is evaporated and a porous structure of the gel tube is obtained.

In the organic substance treating step, residual water within the gel tube is removed and organic substances such as a binder within the gel tube are decomposed by a low-temperature heating treatment. Then, the gel tube is heated under a chorine (Cl) gas atmosphere, so that alkali metallic impurities and OH- ions can be removed from the gel tube.

In the sintering step, air bubbles and gas are removed from the gel tube. The sintering the gel tube includes a step for inserting the gel tube into the sintering apparatus and rotating the inserted gel tube, a step for injecting helium or nitrogen gas into the sintering apparatus, and a step for heating the sintering apparatus.

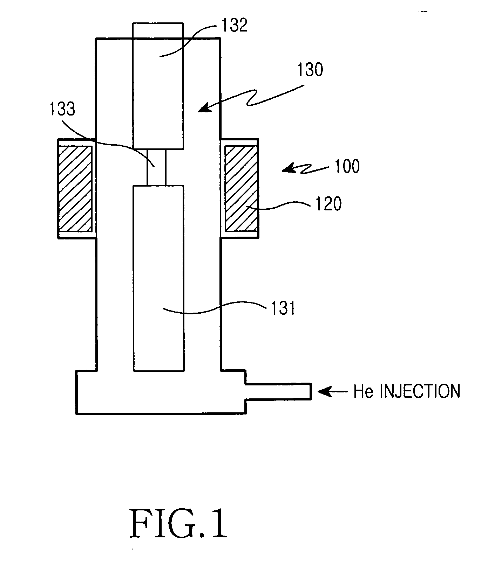

Figure. 1 is a schematic view of a conventional apparatus 100 for sintering a gel tube 131. As shown in Fig. 1, the sintering apparatus 100 comprises a gel tube assembly 130 installed therein and a heater 120 for heating the gel tube 131.

The gel tube assembly 130 includes a dummy rod 133 for clamping the gel tube 131 and a ceramic rod 132 for fixing the gel tube 131 thereto and connecting the gel tube 131 to a rotator (not shown). The gel tube 131 is heated by the heater 120 so as to be sintered. During the sintering of the gel tube 131, gas such as helium or nitrogen is injected into the sintering apparatus 100.

In accordance with the conventional method and apparatus for sintering the gel tube, a pressure within the sintering apparatus is changed irregularly by helium or nitrogen gas injected thereto during the sintering of the gel tube. As a diffusion speed of residual gas in the pores within the gel tube is slower than the sintering speed of the gel tube, air bubbles cannot be thoroughly removed from the inside the gel tube. Therefore, in order to remove gaseous impurities from the gel tube and to increase the density of the gel tube, the temperature within the sintering apparatus must be continuously increased. However, increasing the temperature within the sintering apparatus causes variations in diameters of the upper and lower portions of the gel tube. As such, it is difficult to assure stability of a geometric structure of the gel tube. Further, increasing the temperature within the sintering apparatus continuously in order to densify the gel tube tend to shorten the life span of the sintering apparatus and increases the production cost of the gel tube.

### SUMMARY OF THE INVENTION

The present invention overcomes the above-described problems, and provides additional advantages, by providing a method and apparatus for sintering a gel tube, in which gas emitted from the pores of the gel tube is well diffused and a sintering speed is accelerated, thereby shortening a time required during a sintering process and stabilizing a geometric structure of the gel tube.

According to one aspect of the invention, an apparatus for sintering a gel tube Formed by a sol-gel process is provided and includes: a reaction chamber for accommodating the gel tube, sealed under a vacuum condition; a vacuum pump for adjusting a degree of vacuum inside the reaction chamber according to a control signal; a vacuum gauge for measuring the degree of vacuum inside the reaction chamber; a movable part for supporting the gel tube and for rotating and vertically moving the gel tube according to the control signal; a temperature sensor for measuring a temperature inside the reaction chamber; a heater for adjusting the temperature inside the reaction chamber according to the control signal to sinter the gel tube; and, a controller for controlling the vacuum pump, the heater, and the movable part so as to sinter the gel tube under the vacuum condition.

### BRIEF DESCRIPTION OF THE DRAWINGS

The above and other features and other advantages of the present invention will be more clearly understood from the following detailed description taken in conjunction with the accompanying drawings, in which:
Fig. 1 is a schematic view of a conventional sintering apparatus using gas, such as helium or nitrogen, injected thereto;
Fig. 2 is a flow chart illustrating a process for manufacturing a glass tube in accordance with the present invention;
Fig. 3 is a schematic view of a sintering apparatus in accordance with a first embodiment of the present invention;
Fig. 4 is a schematic view of a sintering apparatus in accordance with a second embodiment of the present invention; and,
Fig. 5 is a schematic view of a sintering apparatus in accordance with a third embodiment of the present invention.

### DETAILED DESCRIPTION OF THE PREFERRED EMBODIMENTS

Now, preferred embodiments of the present invention will be described in detail with reference to the annexed drawings. In the drawings, the same or similar elements are denoted by the same reference numerals even though they are depicted in different drawings. For the purposes of simplicity and clarity, a detailed description of known functions and configurations incorporated herein will be omitted as it may make the subject matter of the present invention rather unclear.

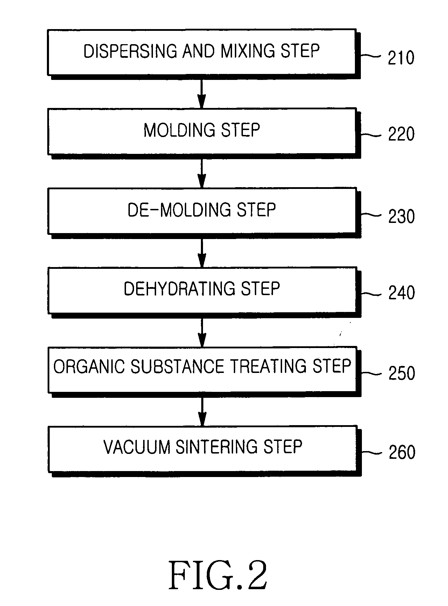

Figure 2 illustrates a process for manufacturing a glass tube in accordance with the present invention. As shown in Fig. 2, the process for manufacturing a glass tube by a sol-gel process comprises a dispersing and mixing step 210 for forming a sol, a molding step 220 for injecting the sol into a mold, a de-molding step 230, a dehydrating step 240, an organic substance treating step 250, and a vacuum sintering step 260 for sintering a formed gel tube under a vacuum condition.

In the dispersing and mixing step 210, a starting material such as silicon alkoxide is mixed with deionized water, then added with additives such as a dispersing agent to form a uniform sol.

In the molding step 220, the sol formed by the dispersing and mixing step 210 is introduced into a mold with a designated shape, then gelled to form a gel. Here, binders for binding the particles of the sol and gelation accelerants may be added to the sole. The mold is made of stainless steel, acryl, polystyrene, or Teflon.

In the de-molding step 230, a gel tube having a cylindrical shape formed within the mold in the above molding step 220 is removed to be maturated. In order to prevent damage to the gel tube, the de-molding step 230 may be performed under a water tank.

In the dehydrating step 240, the gel tube removed from the mold is dehydrated under a drying condition, where a constant temperature is maintained inside humidity chamber. As a result, water contained in the gel tube is evaporated and a porous structure of the gel tube is obtained.

In the organic substance treating step 250, residual water within the gel tube is removed and organic substances, such as binders, within the gel tube are decomposed by a low-temperature heating treatment. Then, the gel tube is heated under a chorine (Cl) gas atmosphere, thus removing alkali metallic impurities and OH⁻ ions from the gel tube.

In the vacuum sintering step 260, the gel tube is inserted into a sintering apparatus and rotated within the apparatus. Then, the sintering apparatus in the vacuum condition is heated to remove air bubbles and/or gas from the gel tube, thus sintering the gel tube. That is, the vacuum sintering step 260 is performed so that the sintering apparatus is vacuumized during the sintering of the gel tube, and a degree of vacuum and a temperature within the sintering apparatus are uniformly maintained.

As the sintering of the gel tube is performed under the vacuum condition, a diffusion speed of gas remaining in pores within the gel tube is faster than a sintering speed of the gel tube. Therefore, air bubbles can be thoroughly removed from inside the gel tube. As a result, in order to improve a density of the gel tube and the sintering of the gel tube, the sintering method of the present invention does not require to raise the temperature excessively within the sintering apparatus. Furthermore, the gel tube can be formed by the vacuum sintering process without having expensive helium or nitrogen gas injected into the sintering apparatus. As such, a cumulative fatigue damage to the sintering apparatus and a production cost of the gel tube are reduced, and the geometric deformation of the gel tube due to excessive heating, as in the conventional art, is minimized.

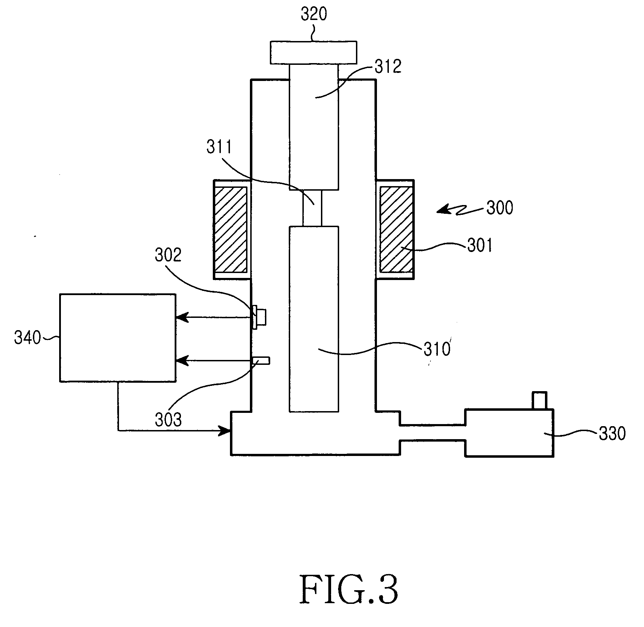

Figure. 3 is a schematic view of the sintering apparatus in accordance with a first embodiment of the present invention. As shown in Fig. 3, the sintering apparatus is used For sintering a gel tube 310 using a sol-gel process and includes a reaction chamber 300 for performing the sintering process therein, a gel tube 310, a movable part 320 for rotating and vertically moving the gel tube 310, a vacuum pump 330, a vacuum gauge 302, a heater 301, a temperature sensor 303, and controller 340.

The gel tube 310 is disposed in the sintering apparatus by a dummy rod 311 used to clamp the gel tube 310 and a ceramic rod 312, which connects the gel tube 310 to the movable part 320.

The gel tube 310 is inserted into the reaction chamber 300. The reaction chamber 300 is vacuumized, and the vacuum condition is maintained during the sintering process of the gel tube 310.

The movable part 320 is disposed above the reaction chamber 300 and rotates and vertically moves the gel tube 310 according to a control signal generated by the controller 340.

The vacuum pump 330 serves to generate a vacuum condition within the reaction chamber 300 and adjusts a vacuum condition within the reaction chamber 300 according to the control signal generated by the controller 340. As for the vacuum pump 330, a low vacuum pump, such as a rotary pump, for generating a low vacuum condition is used, or a medium vacuum pump, such as a mechanical booster pump, for generating a medium vacuum condition simultaneously with the low vacuum pump is used. Alternatively, a high vacuum pump, such as a diffusion pump using an oil diffusion type, or a cryo pump using a low-temperature coolant may be used.

Note that the vacuum pump 330 is selected from the aforementioned pumps in consideration of the dimension of the reaction chamber 300 and the degree of vacuum condition within the reaction chamber 300.

Further, a vent valve may be installed in the sintering apparatus to introduce external air into the reaction chamber 300 after the sintering process of the gel tube 300 is completed, thereby interrupting the vacuum condition of the reaction chamber 300. In addition, a pipe may be used to connect the reaction chamber 300 to the vacuum pump 330, and connection parts between the pipe and the reaction chamber 300 and between the pipe and the vacuum pump 330 are sealed in a vacuum state.

As for the vacuum gauge 302, a Pirani gauge for measuring a medium vacuum condition, or a Penning gauge or an Ion gauge for measuring a high vacuum condition may be used.

In order to sinter the gel tube 310 and increase the density of the gel tube 310, the heater 301 serves to heat the reaction chamber 300 up to a predetermined temperature according to the control signal generated by the controller 340. The heater 301 is ringshaped to surround an outer circumference of the gel tube 310 and is supported by the reaction chamber 300.

A thermal gauge may be used as the temperature sensor 303, which serves to measure the temperature inside the reaction chamber 300.

The controller 340 compares the temperature inside the reaction chamber 300 measured by the temperature sensor 303 to a predetermined temperature for controlling the heater 301 and the movable part 320, so that the gel tube 310 rotably moves in a vertical direction at a predetermined speed. Further, the controller 340 compares the vacuum state of the reaction chamber 300 measured by the vacuum gauge 302 to a predetermined vacuum condition in order to control the vacuum pump 330.

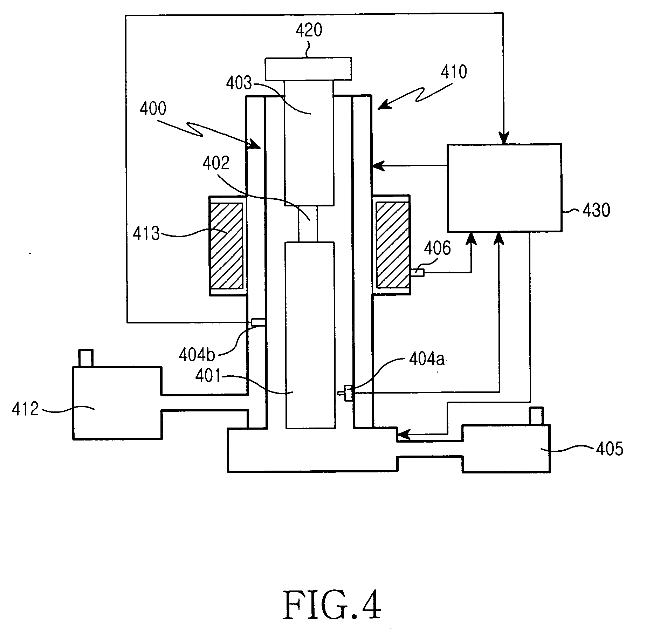

Figure 4 is a schematic view of a sintering apparatus in accordance with a second embodiment of the present invention. As shown in Fig. 4, the sintering apparatus includes a reaction chamber 400 for performing a sintering process, a first vacuum pump 405, a vacuum gauge 404, a movable part 420, temperature sensors 403 and 411, a heater 413, a heating chamber 410, a second vacuum pump 412, and a controller 430. The heating chamber 410 and the reaction chamber 400 of the sintering apparatus according to the embodiment of the present invention are independently vacuumized. The gel tube 401 is disposed within the sintering apparatus by a dummy rod 402, which is used to clamp the gel tube 401, and a ceramic rod 403, which connects the gel tube 401 to the movable part 420. The reaction chamber 400 having the gel tube 401 at its center is sealed under a vacuum condition so as to sinter the gel tube 401. The reaction chamber 400 is made of quartz or etc., and serves to minimize the generation of impurities in high-temperature heating condition and effectively sintering the gel tube 401.

The first vacuum pump 405 serves to generate a vacuum condition within the reaction chamber 400 and also adjusts the vacuum condition within the reaction chamber 400 according to a control signal generated by the controller 430.The vacuum gauge 404 is disposed at one side of the reaction chamber 400 for measuring the vacuum condition inside the reaction chamber 400.

The movable part 420 supports the gel tube 401, and simultaneously rotates and vertically moves the gel tube 401 according to the control signal generated by the controller 430, thereby minimizing a geometric deformation of the gel tube 401 during the sintering at high temperature. The temperature sensors 403 and 411 are respectively disposed at both ends of the reaction chamber 400 and the heating chamber 410 for measuring temperatures of the reaction chamber 400 and the heating chamber 410.

The heater 413 comprises a heat source for sintering the gel tube 401 and, in particular, heats inside the reaction chamber 400 up to a predetermined temperature according to the control signal generated by the controller 430. The heater 413 is ringshaped so as to surround an outer surface of the reaction chamber 400 and is supported by the heating chamber 410. The heating chamber 410 minimizes the deformation of the reaction chamber 400 using the heater 413 and is sealed under a vacuum condition independently of the reaction chamber 400.

The second vacuum pump 412 is connected to the heating chamber 410 and serves to generate a vacuum condition within the heating chamber 410 and adjusts the vacuum condition inside the heating chamber 410 according to the control signal generated by the controller 430.

The controller 430 compares the temperatures of the reaction chamber 400 and the heating chamber 410 respectively measured by the temperature sensors 403 and 411 to a predetermined temperature for controlling the heater 413 and the movable part 420, so that the gel tube 401 can rotate and vertically move at a predetermined speed. Further, the controller 430 compares the vacuum condition of the reaction chamber 400 measured by the vacuum gauge 402 to a predetermined degree of vacuum for controlling the first vacuum pump 405 and the second vacuum pump 412, so that the heating chamber 410 is sealed under the vacuum condition independently of the reaction chamber 400.

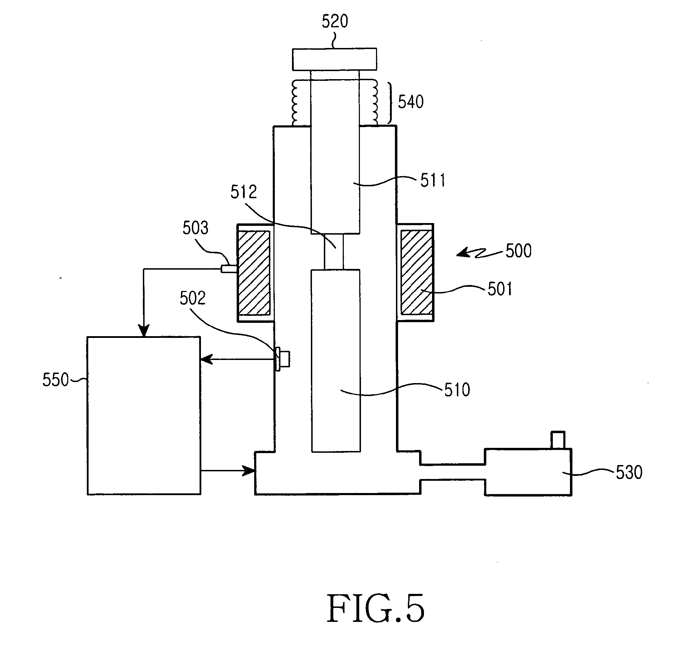

Figure 5 is a schematic view of the sintering apparatus in accordance with a third embodiment of the present invention. As shown in Fig. 5, the sintering apparatus includes a reaction chamber 500 for performing a sintering process, a gel tube 510, a movable part 520 for rotating the gel tube 510, a vacuum pump 530 for generating a vacuum condition within the reaction chamber 500, a vacuum gauge 502 for measuring a pressure within the reaction chamber 500, a temperature sensor 503 for measuring a temperature within the reaction chamber 500, and a bellows 540.

The gel tube 510 is disposed within the sintering apparatus by a dummy rod 512, which clamps the gel tube 510, and a ceramic rod 511 used to connect the gel tube 510 to the movable part 520.

The bellows 540 serves to absorb the impact due to the pressure change within the sintering apparatus, thereby minimizing a physical effect on the gel tube 510. The bellows 540 is disposed on the upper surface of the reaction chamber 500 and configured so that a plurality of rings with a cylindrical shape is vertically and continuously connected to each other. The connection parts of the rings are sealed by an O-ring for preventing the inflow of external gas during the vacuum sintering step.

The controller 550 compares the temperature of the reaction chamber 500 measured by the temperature sensor 503 to a predetermined temperature to control the heater 501 and the movable part 520, so that the gel tube can rotate and vertically move at a predetermined speed. Further, the controller 550 compares the vacuum condition of the reaction chamber 500 measured by the vacuum gauge 502 to a predetermined degree of vacuum for controlling the vacuum pump 530.

As apparent from the above description, the present invention provides a method and an apparatus for sintering a gel tube under a vacuum condition, thereby improving the density of the gel tube and facilitating the adjustment of the temperature inside the apparatus during the sintering. Further, since the temperature and pressure within the sintering apparatus are properly adjusted according to desired materials of a glass tube, the present invention improves the quality of the glass tube and the stability in producing the tube.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A method for sintering a gel tube formed by a sol-gel process,
wherein the gel tube is sintered under a vacuum condition while being rotated and vertically moved so as to increase a diffusion speed of gas remaining in the gel tube.

2. An apparatus for sintering a gel tube formed by a sol-gel change, comprising:
a reaction chamber for housing the gel tube under a sealed vacuum condition;
a vacuum pump for adjusting the vacuum condition inside the reaction chamber according to a control signal;
a vacuum gauge for measuring the vacuum condition inside the reaction chamber;
a movable part for supporting the gel tube and for rotating and vertically moving the gel tube according to the control signal;
a temperature sensor for measuring a temperature inside the reaction chamber;
a heater for adjusting the temperature inside the reaction chamber according to the control signal so as to sinter the gel tube; and,
a controller for controlling the vacuum pump, the heater, and the movable part so as to sinter the gel tube under the vacuum condition.

3. The apparatus of Claim 2, further comprising a valve for selectively introducing an air into the reaction chamber.

4. The apparatus of Claim 2, further comprising a pipe coupled between the reaction chamber and the vacuum pump.

5. An apparatus for sintering a gel tube formed by a sol-gel change, comprising:
a reaction chamber for accommodating the gel tube under a sealed vacuum condition;
a first vacuum pump for adjusting the vacuum condition inside the reaction chamber according to a control signal;
a vacuum gauge for measuring the vacuum condition inside the reaction chamber;
a temperature sensor for measuring a temperature inside the reaction chamber;
a heater for adjusting the temperature inside the reaction chamber according to the control signal so as to sinter the gel tube;
a heating chamber for housing the reaction chamber and for supporting the heater, which is sealed under a vacuum condition independently of the reaction chamber;
a second vacuum pump for adjusting the vacuum condition inside the heating chamber according to the control signal; and,
a controller for controlling the first and second vacuum pumps and the heater so as to sinter the gel tube under the vacuum condition and prevent a deformation of the heating chamber.

6. The apparatus of Claim 5, further comprising a movable part for rotating and vertically moving the gel tube according to the control signal, wherein the controller controls the movable part so that the gel tube rotates and vertically moves while being sintered.

7. The apparatus of Claim 5, wherein the reaction chamber is made of quartz so as to minimize gas generated during the sintering of the gel tube under the vacuum condition.

8. An apparatus for sintering a gel tube formed by a sol-gel change, comprising:
a reaction chamber for housing the gel tube under a sealed vacuum condition;
a vacuum pump for adjusting of the vacuum condition inside the reaction chamber according to a control signal;
a vacuum gauge for measuring the vacuum condition inside the reaction chamber;
a movable part for rotating and vertically moving the gel tube according to the control signal;
a bellows, disposed on the upper surface of the reaction chamber, for absorbing an impact due to a pressure change inside the reaction chamber;
a temperature sensor for measuring a temperature inside the reaction chamber;
a heater for adjusting the temperature inside the reaction chamber according to the control signal so as to sinter the gel tube; and,
a controller for controlling the vacuum pump, the heater, and the movable part so as to sinter the gel tube under the vacuum condition.

9. The apparatus of Claim 8, wherein the bellows comprises a plurality of rings continuously connected to each other.
